# EUROPEAN PATENT APPLICATION

(11) **EP 1 437 335 A1**
(43) Date of publication of application: **14.07.2004**
(21) Application number: 02798813.8
(22) Date of filing: 10.09.2002
(51) Int. Cl.: C05F 17/00

(54) **METHOD FOR TREATING ORGANIC LIQUID USING OZONE GAS AND APPARATUS FOR OZONE TREATMENT OF ORGANIC LIQUID FOR USE IN SAID METHOD**

(30) Priority: 11.09.2001 JP 2001274500; 28.03.2002 JP 2002091873
(71) Applicant: Kita Machine Business Corporation, Tokushima-shi, Tokushima 770-0044 (JP)
(72) Inventor: KOSUMI, Takahiko, Myozai-gun, Tokushima 779-3223 (JP)
(74) Representative: Morf, Jan Stefan, Dr. Dipl.-Chem.
(86) International application number: PCT/JP2002/009189
(87) International publication number: WO 2003/024895

(57) **Abstract**

The present invention relates to a method which efficiently carries out an oxidation treatment on a liquid containing various organic substances, and more particularly, concerns a method which is suitable for producing a liquid fertilizer from livestock excreta. The present invention also provides an apparatus for the ozone treatment of an organic liquid to be used in such a method.

Upon carrying out an oxidization treatment by introducing ozone gas to a liquid containing organic substances, an organic liquid to be subj ected to the ozone treatment and ozone gas from an ozone-gas supply source are mixed with each other so that the ozone gas is brought into contact with the organic liquid in a fine foam state in a reaction treatment device, and after introducing the mixed liquid to a gas-liquid separation device and degassing and removing excessive ozone gas, a liquid product that has been subjected to the treatment is extracted. In this case, the liquid obtained by mixing the organic liquid and ozone gas is preferably pressurized before it is introduced to the liquid-gas separation device so as to accelerate dissolution of the ozone gas. Moreover, in the case where the liquid is circulated, the process is continuously carried out, and the separated ozone gas is preferably circulated, and reused.

## Description

### TECHNICAL FIELD

The present invention relates to a method which carries out an oxidation treatment on a liquid containing organic substances by introducing ozone gas thereto, and more particularly, concerns a method which introduces ozone gas into livestock excreta so as to produce a liquid fertilizer.

Moreover, the present invention also relates to an apparatus for treatment of an organic liquid using ozone that effectively carries out an ozone-gas-oxidation treatment on a liquid containing organic substances, and eliminates the necessity of a facility for an ozone discharging process.

### BACKGROUND ART

In the field of the livestock industry, a technique which produces a liquid fertilizer from livestock excreta through an accelerated oxidization by using bacteria has been conventionally known; however, at present, it generally requires about 3 months to make excreta into a liquid fertilizer, and this process causes a problem of strong offensive odor during the oxidation treatment. For this reason, in order to accelerate oxidization in a shorter period of time, a system (aeration system) for accelerating oxidization by sending air bubbles into an excreta storing vessel has been proposed, and a multi-vessel system in which aeration is carried out on each of multiple vessels has also been proposed. However, in these cases also, since open vessels are used for the excreta vessels, the resulting problem is that strong offensive odor is generated during the oxidation treatment, and a deodorizing apparatus is often required.

In this manner, there has not been proposed any method or apparatus that can carry out the processes in an air-sealed state without using bacteria.

In the recent livestock industry, there has been a reduction in usable farm fields, and there has been a growing concern about nitrate-state nitrogen contamination of soil due to over use. As urbanized areas are expected to increase in the future, there have been strong demands for achieving a city-type dairy firm management that is in harmony with local environments by solving problems of offensive odor upon scattering a liquid fertilizer so as to expand usable areas.

Moreover, waste water containing various organic substances is discharged from food-processing companies, and in the waste-water treatment, treatment processes using bacteria and the aeration system require long time, failing to provide an effective treatment.

Furthermore, in the case of conventionally proposed apparatuses for treatment using ozone gas, since organic substances located in a liquid inside a large-size disposal vessel are brought into contact with ozone gas, a large-size apparatus is required as a whole, and an ozone discharging facility is required so as to safely discharge unreacted ozone gas into the air.

The objective of the present invention is to solve the above-mentioned problems with conventional processes using bacteria and the aeration system, and to provide a treatment method and a treatment apparatus which can carry out an oxidization treatment on various organic liquids efficiently.

The inventors of the present invention have found that an organic liquid to be subjected to an ozone treatment is brought into contact and mixed (stirred) with ozone gas in a fine foam state (preferably, having a size of not more than 1 mm, that is, a foam state having a particle size in the micron order) in a reaction treatment device that is kept in a closely sealed state from air so that the oxidizing reaction efficiency is improved and that by removing an excessive ozone gas from the liquid that has been mixed, it becomes possible to extract a liquid that has been effectively subjected to an ozone-gas treatment (oxidization treatment) in a short time without externally causing offensive odor; thus, the present invention has been devised.

Moreover, the inventors of the present invention have found that, by circulating the organic liquid inside the apparatus, it becomes possible to make the ozone reaction unit (reaction treatment device) smaller, and that different from a fixed-installation type plant, the apparatus can be transferred freely and by circulating unreacted ozone gas in the apparatus, it becomes possible to eliminate the necessity of the conventional ozone discharging facility, and to carry out an ozone gas treatment safely by using a small-size apparatus; thus, the present invention has been achieved.

### DISCLOSURE OF THE INVENTION

The treatment method for an organic liquid using ozone gas of the present invention capable of solving the above-mentioned problems, which is a method for carrying out an oxidization treatment by introducing ozone gas to a liquid containing organic substances, has the steps of mixing an organic liquid to be subjected to an ozone treatment and ozone gas from an ozone-gas supply source so that the ozone gas is brought into contact and mixed with the organic liquid in a fine foam state in a reaction treatment device, and after introducing the mixed liquid to a gas-liquid separation device and degassing and removing excessive ozone gas, extracting a liquid product that has been subjected to the ozone-gas treatment.

Moreover, the present invention, which relates to a treatment method having the above-mentioned features, is characterized in that the liquid obtained by mixing the organic liquid and ozone gas is pressurized before it is introduced to the above-mentioned liquid-gas separation device so as to accelerate the dissolution of the ozone gas, and is introduced to the above-mentioned liquid-gas separation device.

Furthermore, the present invention, which relates to a treatment method having the above-mentioned features, is characterized in that the above-mentioned organic liquid is supplied from a storing unit containing the above-mentioned organic liquid to the reaction treatment device and the resulting liquid that has been subjected to the ozone gas treatment is again returned to the above-mentioned storing unit so that the ozonegastreatmentiscontinuouslycarriedoutwhilecirculating the organic liquid in the storing unit.

Moreover, the present invention, which relates to a treatment method having the above-mentioned features, is characterized in that the ozone gas, separated by the above-mentioned gas-liquid separation device, is circulated together with the ozone gas supplied from the ozone-gas supply source, and introduced to the above-mentioned reaction treatment device. Here, the apparatus for ozone treatment of an organic liquid of the present invention is an apparatus to be used upon carrying out an oxidization treatment on a liquid containing organic substances by introducing ozone gas thereto, and the apparatus is provided with a storing unit containing an organic liquid to be subj ected to an ozone treatment, an ozone-gas supply source capable of generating ozone gas, a reaction treatment device capable of carrying out a mixing process with the ozone gas being brought into contact with the organic liquid in a fine foam state, and a gas-liquid separation device for degassing and removing excessive ozone gas from the liquid that has been subjected to the ozone-gas treatment, and the apparatus is also provided with a first circulation flow path that is arranged so that the organic liquid in the above-mentioned storing unit is joined to ozone gas from the ozone gas supply source, and supplied to the above-mentioned reaction treatment device, with the liquid that has been ozone-gas treated in the reaction treatment device being sent to thegas-liquidseparationdevice, and the liquid that has been gas-liquid separated and subjected to the ozone-gas treatment is allowed to return to the storing unit, and a second circulation flow path that is arranged so that an excessive ozone gas, separated by the above-mentioned gas-liquid separation device, is joined to ozone gas from the ozone gas supply source, and introduced to the above-mentioned reaction treatment device.

### BRIEF DESCRIPTION OF THE DRAWINGS

Fig. 1 shows one example of a treatment apparatus that is suitably applied to a treatment method of the present invention.
Fig. 2 is a system flow chart that shows one example of a structure which relates to a purifying apparatus having a raw water vessel, an aeration vessel, a precipitation vessel and a discharging vessel, and is used for an apparatus for ozone treatment of an organic liquid of the present invention.

### BEST MODE FOR CARRYING OUT THE INVENTION

First, the following description will discuss a treatment method for an organic liquid of the present invention, which uses ozone gas.

In the present invention, upon treating various liquids containing organic substances, ozone gas is used without using bacteria, and the organic substances are oxidized through an oxidizing function of ozone gas. With respect to the organic liquids to be treated by the treatment method of the present invention, any liquid maybe treatedas long as it contains organic substances capable of being oxidized, and although not limited by these, examples thereof include livestock excreta, organic sludge, organic wastewater and the like. With respect to the supply source of ozone gas to be used for the oxidizing reaction, a gas cylinder may be used, and a commercially available ozone generator, which is capable of generating ozone gas by utilizing oxygen in the air, is more preferably used.

Here, in the present invention, the organic liquid to be subjected to an ozone treatment and ozone gas from the ozone gas supply source are mixed in a reaction treatment device having an inner structure capable of mixing a gas and a liquid in such a manner that the ozone gas is effectively brought into contact with the organic liquid in a fine foam state, and with respect to the reaction treatment device to be used, a commercially available gas-liquid mixing type mixing pump may be used, and, for example, a mixing pump produced by Nikuni Co., Ltd. is preferably used. When such a mixing pump is used, ozone gas which is formed into fine foam in the order of micron inside the pump that is tightly sealed from air, and brought into contact with organic substances so that ozone is consumed in a short time (several seconds) to complete the oxidizing process. In the present invention, the organic substances existing in the liquid are contact-oxidized so that insoluble matters are partially made soluble and gasified to have a reduction in volume.

In contrast, even when an organic liquid is loaded into a treatment vessel that is opened upward and ozone gas is introduced thereto, only a small amount of ozone gas is allowed to react while the ozone gas passes through the liquid, failing to provide sufficient oxidizing efficiency in the organic substances.

In the present invention, the liquid that has been subj ected to an oxidation treatment by ozone gas in this manner, is then directed to the gas-liquid separation device in which excessive ozone gas is degassed and removed so that the resulting liquid that has been treated by ozone gas is taken out as a liquid product, and the excessive ozone gas may be reused. In the treatment method of the present invention, since the excessive ozone gas is removed from the liquid product by the gas-liquid separation device used for separating a gas and a liquid from each other, the ozone gas is not externally discharged together with the liquid product; thus, this method is also superior in safety. Moreover, in the case where the ozone gas, separated by the gas-liquid separation device, is circulated together with ozone gas supplied from the ozone gas supply source, and directed into the reaction treatment device, it becomes possible to eliminate the necessity of the conventional ozone discharging facility, and consequently to carry out an ozone gas treatment safely by using a small-size device.

In this case, in the present invention, prior to introducing the liquid that has been oxidizedby ozone gas into the gas-liquid separation device, the liquid is preferably pressurized, and directed to the gas-liquid separation device; thus, this applied pressure compresses the volume of ozone gas foam in the liquid so that ozone is allowed to easily dissolve therein, making it possible to carry out the processes in a shorter time. The applied pressure to the liquid that has been ozone-gas treated is appropriately adjusted depending on the kinds of the liquid, and it is normally set to not less than 0.1 MPa, preferably, about 0.4 MPa.

In the method of the present invention, a liquid containing organic substances is mixed with ozone gas, and pressurized and sent so that ozone is allowed to dissolve in an over saturated state so that the ozone concentration in the liquid becomes higher; consequently, from the viewpoint of treatment characteristics in the ozone treatment, the decomposing rate of the organic substances becomes higher in proportion to the ozone concentration so that the organic substances are contact-oxidized to be decomposed and modified, making it possible to achieve a reduction in volume. Here, in the conventional method, since organic substances and ozone gas are normally allowed to react with each other through an aeration process, the resulting liquid is not allowed to physically exceed a saturated state; however, in the present invention, the foam of ozone gas is pressurized so that the ozone concentration of the organic liquid is allowed to come into an over saturated state, thereby making it possible to increase the ozone treatment efficiency and also to generate fine foam when it is released from the over saturated state (when returned to normal pressure).

Moreover, in the present invention, an organic liquid to be subjected to an ozone treatment is loaded into a storing unit (which may be either a closed system or an open system), and the organic liquid is supplied into the above-mentioned reaction treatment device from the storing unit to be subjected to an ozone treatment, and after the ozone gas treatment, the liquid is preferably again returned to the storing unit; thus, the organic liquid in the storing unit is continuously subjected to the ozone gas treatment while being circulated so that the treatment efficiency can be improved. In this case, a plurality of units, each including an ozone supply source, a reaction treatmentdeviceandagas-liquidseparationdevice, areprepared, and these are series-connected so that the liquid that has been subjected to the ozone gas treatment in the first unit, is successively sent to the succeeding unit, and treated therein so that the liquid that has been treated in the final unit may be taken out as a product liquid, or again returned to the storing unit.

The application of the treatment method of the present invention makes it possible to oxidize organic substances contained in, for example, livestock excreta to be made into a liquid fertilizer through an oxidizing function of ozone gas; thus, it becomes possible to efficiently produce a liquid fertilizer in a short time without using bacteria.

Here, the method of the present invention may be effectively applied not only to production of a liquid fertilizer, but also to a treating process for organic wastewaters discharged from various food companies.

The following description will discuss a structure of an apparatus for ozone treatment of an organic liquid that is preferably used for the treatment method of the present invention.

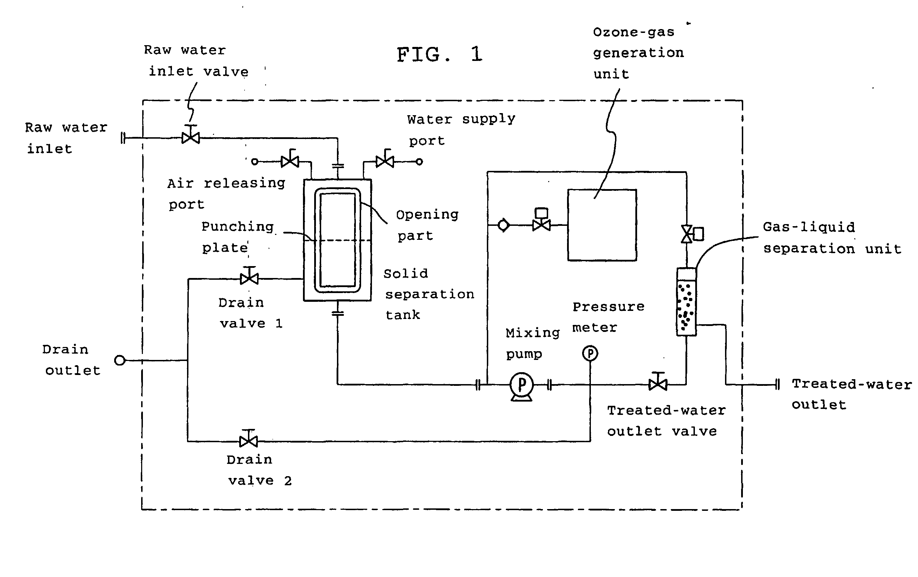

Fig. 1 shows one example of the structure of the treatment apparatus that is preferably applied to the above-mentioned treatment method; however, the structure of the treatment apparatus to be used in the treatment method of the present invention is not intended to be limited thereto.

The treatment apparatus shown in Fig. 1 has a structure in which a raw material (raw water) containing solid and liquid components is separated into solid and liquid in a solid-matter separation tank so that the separated liquid is directed to a mixing pump; however, in the case where the solid-liquid separation is not required, the structure on the left half side of the figure is unnecessary. Further, ozone gas, supplied from the ozone gas generator (ozone gas supply unit) , and the liquid that has been separated are supplied to the mixing pump together, and mixed therein. In this case, in the pump, ozone gas is formed into fine foam, and brought into contact with the liquid so that an oxidizing reaction is carried out. In the present invention, the application of such a mixing pump makes it possible to miniaturize the apparatus; however, the reaction treatment device is not intended to be limited thereto, and for example, another structure in which an organic liquid is sent into a reaction treatment vessel having a tightly closed structure and ozone gas is jetted onto this organic liquid from an ejector having a structure capable of generating fine foammaybe adopted. In this case, in general, with respect to the ozone gas generator, a commercially available ozone gas generator, which generates ozone gas with high purity from air, is utilized, and the one that is suitable for the concentration of organic substances in the organic liquid to be treated and the flow rate per unit time of the organic liquid is appropriately selected.

In the apparatus shown in Fig. 1, a treated-water outlet valve is placed on the discharging side of the mixing pump, and by adjusting the degree of opening and closing states of this valve, the liquid obtained after mixing the organic liquid and ozone gas is pressurizedprior to being directed to the gas-liquid separation device so that the solubility of the ozone gas is increased; thus, during these processes, the ozone treatment (oxidation treatment) of the organic substances is virtually achieved. Here, the pressure between the discharging side of the mixing pump and the treated water outlet valve is displayed on a pressure meter.

Thereafter, the liquid product that has passed through the treated-water outlet valve and has been subjected to the ozone treatment is sent to the gas-liquid separation unit, and, as shown in the figure, an excessive ozone gas is removed upward, and again circulated into the mixing pump; thus, the liquid product that has been ozone-treated is discharged from the gas-liquid separation unit through the treated-water outlet. For this reason, different from the conventional device that requires anozone discharging facility for discharging unreacted ozone gas outside the apparatus (to the air) safely, the apparatus of the present invention having such a circulating mechanism does not require such a discharging facility.

The apparatus having the arrangement of Fig. 1 generates ozonegaswithhigh purity fromatmospheric air, andbygas-liquid mixing the ozone gas thus generated and an organic liquid by using a mixing pump, the organic substances in the organic liquid are oxidized in a short time, and offensive-odor components are simultaneously oxidized and decomposed in a molecular level. In particular, the apparatus having the above-mentioned arrangement is preferably used for a treatment of livestock excreta disposal does not depend on bacteria, and the resulting liquid product is utilized as a liquid fertilizer.

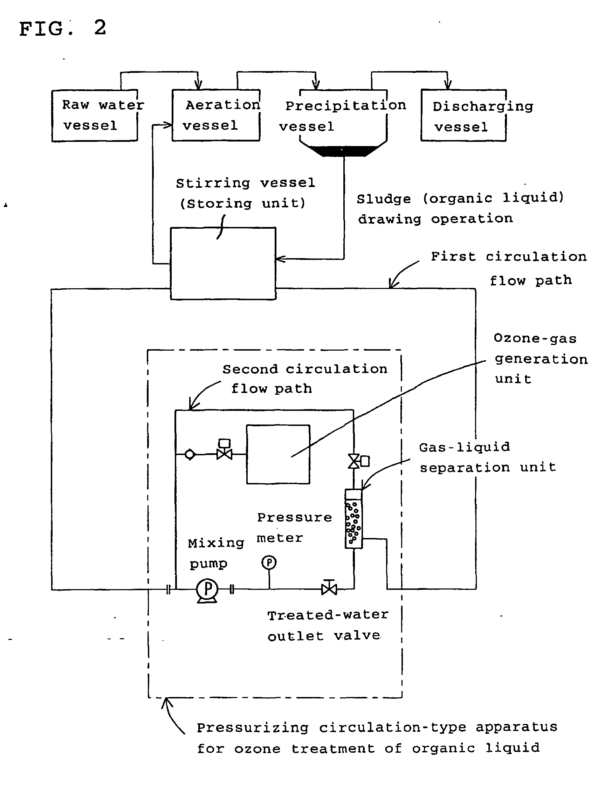

Fig. 2 shows a system flow chart that indicates one example of the structure of the apparatus for ozone treatment of an organic liquid of the present invention that is applied to a purifying facility provided with a raw water vessel, an aeration vessel, a precipitation vessel and a discharging vessel.

The treatment apparatus of the present invention (pressurizing circulation-type apparatus for ozone treatment of organic sludge) used for the system shown in Fig. 2 is provided with a first circulating flow path in which: a precipitate (organic sludge) deposited in the precipitation vessel is drawn and directed to a stirring vessel (storing unit), and stirred therein, and the organic sludge in this stirring vessel is allowed to join to ozone gas supplied from an ozone-gas supply source in the same manner as the case shown in Fig. 1, and supplied to a reaction treatment device (mixing pump), and the liquid that has been ozone-gas treated in the reaction treatment device is sent to a gas-liquid separation device, with the liquid that has been gas-liquid separated and ozone-gas treated being returned to the stirring vessel; thus, the organic sludge is subjected to the circulating treatment. Moreover, this apparatus is also provided with a second circulating flow path in which an excessive ozone gas separated in the gas-liquid separator is allowed to join to ozone gas supplied from the ozone gas supply source, and introduced into the reaction treatment device, and with respect to the first circulating flow path and the second circulating flow path commonly have a portion from the reaction treatment device to the gas-liquid separationdevice so that the ozone gas is allowed to circulate the second circulating flow path; thus, different from the conventional device, no ozone discharging facility is required. Further, in the system of Fig. 2, the sludge that has been ozone-treated with cells being ruptured by the treatment apparatus of the present invention is again returned to the aeration vessel to be subj ected to a biological treatment; thus, it becomes possible to improve the treatment efficiency in the entire system.

By using the treatment apparatus of the present invention, the organic substances in the liquid are oxidized and decomposed so that one portion of insoluble matters is made soluble or gasified. In this case, the liquid is allowed to react with pressurized ozone gas so that the organic substances are more effectively decomposed.

Here, in the treatment apparatus of the present invention, ozone gas is circulated inside the apparatus so that the treatment apparatus is superior in safety with respect to ozone gas, and the entire apparatus is not bulky, andappropriatelyminiaturized to be prepared not as a fixedly installed plant, but as a movable treatment apparatus; thus, the resulting advantage is that this apparatus can be attached to an existing facility that has been installed.

The following description will discuss results of experiments in which a liquid fertilizer is manufactured from cattle excreta, as a specific example of the treatment method of the present invention; however, the present invention is not intended to be limited thereby.

### EXAMPLES

Cattle excreta stored in a storing vessel was used as an organic liquid, and this was mixed with ozone gas by using a commercially available mixing pump (made by Nikuni Co., Ltd. power consumption: 2.2 kW). In this case, the amount of charge of the organic liquid was set to 7.2 Nm³/h, and the amount of supply of ozone gas was set to 0.24 Nm³/h (= 10 g/h) , and excessive ozone gas was removed by a gas-liquid separation device, and then taken out as a liquid product.

With respect to the excreta prior to the ozone treatment and the liquid product subjected to the treatment, the chemical oxygen demand, biochemical oxygen demand and suspended substance amount were measured, and the results thereof are shown in the following Table 1.

**Table 1**

| Inspection items | Unit | Measured value | | Quantity lower Limit value | Method for measurements |
|---|---|---|---|---|---|
| | | Before process | After process | | |
| Chemical oxygen demand (COD. Mn) | mg/L | 2700 | 1400 | 0.5 | JIS K012 17 |
| Biochemical oxygen demand (BOD5) | mg/L | 2000 | 170 | 0.5 | JIS K012 21 and 32.3 |
| Suspended substance (SS) | mg/L | 940 | 110 | 1.0 | Attached list 8 of recommendation No. 59 in 1971 |

As will be understood by the contents of Table 1, after the treatments by the method of the present invention, both of the values of the chemical oxygen demand (COD) and biochemical oxygen demand (BOD) of the product that was subjected to the ozone-gas treatment are reduced in comparison with those before the treatments, and these results indicate that the product is applicable as a liquid fertilizer and that the application of the product provides environments capable of accelerating growth of crops.

Moreover, oxidation-reduction potentials (ORP) of the excreta before and after the above-mentioned ozone-gas treatment were measured, and found to be -455 mV before the treatment and 50 mV after the treatment. With respect to the pH, the values were 8.0 before the treatment and 8.2 after the treatment, and with respect to the dissolved oxygen (DO) the values were 0 mg/l before the treatment and 15.4 mg/l after the treatment. With respect to offensive odor, those before the treatment caused strong offensive odor; however, those after the treatment hardly produced any offensive odor.

Moreover, with respect to the product obtained in this manner, concentrations of total nitrogen, total phosphor and potassium as well as the number of coliform bacilli were measured, and the following Table 2 shows the results of the measurements.

**Table 2**

| Items | Unit | Results of Measurements | Quantity Lower-Limit Value |
|---|---|---|---|
| Total nitrogen | mg/l | 2380 | 0.05 |
| Total phosphor | mg/l | 29.7 | 0.005 |
| Potassium | mg/l | 4260 | 0.04 |
| Coliformbacilli | number/ml | 159 | - |

| Items | Measuring Methods |
|---|---|
| Total nitrogen | JIS K 0102 45.2 |
| Total phosphor | JIS K 0102 46.3 |
| Potassium | JIS K 0102 49.2 |
| Coliformbacilli | JIS K 0102 72.3 |

The results of the measurements shown in Table 2 indicate that the liquid product obtained by the ozone-gas treatment of the present invention contains sufficient amounts of components required as a liquid fertilizer.

### INDUSTRIAL APPLICABILITY

The method of the present invention is suitable for carrying out an oxidization treatment on various organic solutions efficiently, and in particular, when applied to a livestock excreta treatment, the present method makes it possible to manufacture a liquid fertilizer effectively in a short time, and since offensive odor components in urea are decomposed, it becomes possible to solve problems of offensive odor upon reducing treatment fields. Moreover, upon scattering the liquid fertilizer thus obtained, it is possible to prevent generation of offensive odor; therefore, it becomes possible to prevent nitrate-state nitrogen contamination of soil by expanding areas that can be reduced, and in particular, by purifying urea, it becomes possible to reduce the BOD, COD, SS andcolliformbacilli, andconsequentlytogreatlyreduceadverse effects imposed on environments.

Furthermore, since the treatment apparatus of the present invention has a circulation system for the organic liquid, it becomes possible to miniaturize the ozone reaction treatment device, and since ozone separated by the gas-liquid separation device is circulated inside the apparatus, no ozone discharging facility is required and it is possible to provide a safe apparatus in a small size.

## Claims

1. A method for treating an organic liquid using ozone gas, which is a method for carrying out an oxidization treatment by introducing ozone gas to a liquid containing organic substances, comprising the steps of:
mixing an organic liquid to be subj ected to an ozone treatment and ozone gas from an ozone-gas supply source so that the ozone gas is brought into contact with the organic liquid in a fine foam state in a reaction treatment device; and
after introducing the mixed liquid toagas-liquidseparation device and degassing and removing excessive ozone gas , extracting a liquid product that has been subjected to the ozone-gas treatment.

2. The method for treating an organic liquid according to claim 1, wherein the liquid obtained by mixing the organic liquid and ozone gas is pressurized before the liquid is introduced to the liquid-gas separation device so as to accelerate dissolution of the ozone gas, and is then directed to the liquid-gas separation device.

3. The method for treating an organic liquid according to claim 1 or 2, wherein the organic liquid is supplied from a storing unit containing the organic liquid to the reaction treatment device and the resulting liquid that has been subjected to the ozone gas treatment is again returned to the storing unit so that the ozone gas treatment is continuously carried out while circulating the organic liquid in the storing unit.

4. The method for treating an organic liquid according to any one of claims 1 to 3, wherein the ozone gas, separated by the gas-liquid separation device, is circulated together with the ozone gas supplied from the ozone-gas supply source, and introduced to the treatment device.

5. An apparatus for ozone treatment of an organic liquid, which is an apparatus to be used upon carrying out an oxidization treatment on a liquid containing organic substances by introducing ozone gas thereto, comprising:
a storing unit containing an organic liquid to be subjected to an ozone treatment;
an ozone-gas supply source capable of generating ozone gas;
a reaction treatment device capable of carrying out a mixing process with the ozone gas being brought into contact with the organic liquid in a fine foam state; and
a gas-liquid separation device for degassing and removing excessive ozone gas from the liquid that has been subjected to the ozone-gas treatment,
wherein the apparatus further comprises a first circulation flow path that is arranged so that the organic liquid in the storing unit is joined to ozone gas from the ozone gas supply source, and supplied to the reaction treatment device, with the liquid that has been ozone-gas treated in the reaction treatment device being sent to the gas-liquid separation device, and the liquid that has been gas-liquid separated and subjected to the ozone-gas treatment is allowed to return to the storing unit, and a second circulation flow path that is arranged so that the excessive ozone gas, separated by the gas-liquid separation device, is joined to ozone gas from the ozone gas supply source, and introduced to the reaction treatment device.
